# EUROPÄISCHE PATENTSCHRIFT

(11) **EP 2 486 200 B1**
(45) Veröffentlichungstag und Bekanntmachung des Hinweises auf die Patenterteilung: **28.08.2013**
(21) Anmeldenummer: 10744850.8
(22) Anmeldetag: 07.07.2010
(51) Int. Cl.: E04C 5/01, E04C 5/03, E04C 5/07

(54) **METALLFASER MIT EINER FASE IN DER FASERLÄNGSRICHTUNG VERLAUFENDEN FASERKANTE**
METAL FIBER HAVING A CHAMFER IN THE FIBER EDGE EXTENDING IN THE LONGITUDINAL DIRECTION OF THE FIBER
ARMATURE MÉTALLIQUE À ARÊTE CHANFREINÉE DANS LE SENS DE LA LONGUEUR DE L'ARMATURE

(30) Priorität: 08.10.2009 DE 102009048751
(43) Veröffentlichungstag der Anmeldung: 15.08.2012
(73) Patentinhaber: CENT & CENT GMBH & CO. KG, 89155 Erbach (DE)
(72) Erfinder: STAHL, Karl-Hermann, 89269 Vöhringen (DE)
(74) Vertreter: Dziewior, Joachim
(86) Internationale Anmeldenummer: PCT/DE2010/000787
(87) Internationale Veröffentlichungsnummer: WO 2011/041995

(56) Entgegenhaltungen:
- EP-A1- 0 861 948
- EP-A2- 1 375 773
- DE-C- 805 711
- FR-A- 1 382 445
- US-A- 6 060 163

## Beschreibung

Die Erfindung betrifft eine Metallfaser mit im wesentlichen rechtwinklig zueinander ausgerichteten Faseraußenoberflächen, auch mit abgewinkelten Enden in Form einer Klammer, zur Stabilisierung, Verfestigung oder Befestigung von Materialien wie Beton, Holz und dergleichen.

Derartige Metallfasern in gerader Ausführung werden beispielsweise zur Verbesserung der Leistungsfähigkeit von Beton bezüglich der Zug-, Druck- und Stoßbelastbarkeit als Betonzusatzmittel eingesetzt, wodurch etwa verhindert werden kann, dass ein sich im Beton gebildeter Anriss durch zunehmende Aufweitung weiter läuft. Metallfasern mit abgewinkelten Enden, also U-förmig als Klammern werden als Verbindungselement bei weichen und elastischen Materialien, also z.B. im weitesten Sinne im Holzbereich, in der Bau- und Möbelindustrie und im Kunststoffbereich eingesetzt.

Bei all diesen Anwendungen ist es in der Regel wünschenswert, die Metallfasern in ihrer Formgebung so zu beeinflussen, dass sie in der Lage sind, gegenüber den sie umgebenden Materialien Zugkräfte aufzunehmen. Bei Metallfasern für den Einsatz in Beton, die üblicherweise als Drahtstahlfasern ausgebildet sind, ist es hierzu üblich, beispielsweise Kröpfungen an den Faserenden anzubringen, wobei sich beobachten läßt, daß die hierdurch aufnehmbaren Zugkräfte relativ begrenzt sind, da die Drahtstahlfaser unter Zugbelastung ihre Hakenform ändert, also durch den von ihr gebildeten Kanal herausgezogen werden kann. Durch die Hakenform an beiden Drahtstahlfaserenden wird im Prinzip nur der Reibschluß zwischen Faser und dem Beton verbessert.

Aus US 6060163 A1 oder FR 1382445 A ist eine solche Metallfaser bekannt, die zur Stabilisierung bzw. Verfestigung von Materialien wie Beton, Keramik oder Plastik verwendet wird und verschledene Querschnittsgeometrien besitzt.

Bei Heftklammern, die beispielsweise mittels Elektrotackern verarbeitet werden und die dazu zu mehreren in Form von Stäben verklebt sind, ist eine derartige Formgestaltung kaum möglich, so dass hier immer mit Klammern von verhältnismäßig großer Beinlänge gearbeitet werden muss, um ausreichende Reibkräfte von dem die Klammer umgebenden Material aufzubringen, die ein leichtes Herausziehen der Klammer verhindern.

Hiervon ausgehend liegt der Erfindung die Aufgabe zugrunde, Metallfasern beider Fasertypen der eingangs genannten Art dahingehend zu verbessern, dass sie gegenüber dem sie umgebenden Material bei gleicher Länge erheblich höhere Widerstandskräfte gegen Zugbelastung in ihrer Längsrichtung aufbringen. Die Verbesserung ist im Rahmen eines neuen Herstellungsverfahrens ohne großen zusätzlichen Aufwand möglich.

Diese Aufgabe wird nach der Erfindung dadurch gelöst, dass die von den Faseraußenoberflächen der Metallfaser gebildeten, in Faserlängsrichtung verlaufenden Faserkanten in der Art einer Fase als schräg zu den Faseraußenflächen ausgerichtete Kantflächen ausgebildet sind, und dass diese Kantflächen Vorsprünge aufweisen, die Verankerungsköpfe gegenüber den zu stabilisierenden oder zu verfestigenden bzw. befestigenden Materialien bilden.

Der durch die Erfindung erreichte Vorteil besteht im Wesentlichen darin, dass diese Verankerungköpfe, von denen in Längsrichtung der Metallfaser eine Vielzahl vorgesehen sein kann, bei Zugbelastung jeweils einzeln hohe Friktionskräfte gegenüber dem umgebenden Material aufbringen, so dass bei gleicher Faserlänge insgesamt eine erheblich höhere Belastbarkeit erreicht wird.

In bevorzugter Ausführungsform der Erfindung ist vorgesehen, dass die Verankerungsköpfe im Bereich der Kantflächen den Querschnitt der Faser vergrößernde Ankerkeilflächen bilden, wobei der Querschnitt der Faser im Scheitelbereich der Verankerungsköpfe im Wesentlichen rechteckige Gestalt aufweist.

Hierbei hat es sich weiter als vorteilhaft erwiesen, wenn die Ankerkeilflächen unter einem Winkel von 10° bis 60° gegenüber der Längsrichtung der Faser und - soweit aus Bandmaterial gefertigt - geneigt zur ehemaligen Vormaterialbandoberfläche ausgerichtet sind. Besonders günstig ist hierbei, wenn die Ankerkeilflächen hierbei unter einem Winkel von 15° bis 30° gegenüber der Längsrichtung der Faser, die im Beton zum Einsatz kommt, ausgerichtet sind.

Üblicherweise wird man die Metallfaser - insbesondere die gerade Stahlfaser, die im Beton zum Einsatz kommt - so gestalten, dass die acht Ankerkeilflächen eines Verankerungskopfes achssymmetrisch und symmetrisch zum Scheitel des Verankerungskopfes, also unter gleichem Winkel angeordnet sind.

Bei der Metallfaserklammer bietet es sich an, um die Friktionskräfte jedenfalls in einer Richtung zu erhöhen, ohne hierbei die Verankerungsköpfe selbst zu schwächen, kann es sich auch empfehlen, die Ankerkeilflächen eines Verankerungskopfes unsymmetrisch zum Scheitel des Verankerungskopfes, also unter ungleichen Winkeln anzuordnen, wobei dann vorteilhafterweise die Ankerkeilfläche unter kleinerem Winkel zu dem ihr näher gelegenen Ende der Metallfaser, in Eintreibrichtung, weist.

Die Kantflächen können im Rahmen der Erfindung unter einem Winkel von 30° bis 60° an die Faseraußenoberfläche angrenzen. Üblicherweise wird die Ausrichtung so erfolgen, dass die Kantflächen unter einem Winkel von 45° an die Faseraußenfläche angrenzen. Soweit die Herstellung der Metallfasern aus Bandmaterial über einen Kerbwalzprozess erfolgt, sind die Faseraußenflächen zweimal von der Bandoberfläche und zweimal von der Bruchoberfläche gebildet.

Weiter hat sich eine Formgestaltung der Art bewährt, bei der die Breite der Faseraußenfläche im Bereich zwischen den Verankerungsköpfen etwa 33% der Dicke bzw. der Breite der Faser beträgt. Damit ergibt sich zwischen den Verankerungsköpfen bei der Stahlfaser für Beton ein in etwa achteckiger Querschnitt.

Generell gilt hierbei, daß die Metallfaser in Längsrichtung betrachtet insbesondere hinsichtlich ihrer geometrischen Eigenschaften variieren kann. So können die Verankerungsköpfe bezüglich Form und Größe voneinander abweichen; auch die Kantflächen jeweils zwischen zwei Verankerungsköpfen können in Breite und Winkellage unterschiedlich gestaltet sein, wobei auch der Abstand der einzelnen Verankerungsköpfe sowohl äquidistant wie auch periodisch oder frei wechselnd gewählt werden kann.

Das Vormaterial für die Metallfaser kann hinsichtlich Materialfestigkeit und Härte dem jeweiligen Anwendungszweck entsprechend geeignet ausgewählt werden; daher kommt für das Vormaterial der gesamte Festigkeitsbereich von weich bis hart in Betracht. Für die Stahlfaser zum Einsatz in Beton ist eher der niedrige Festigkeitsbereich und für die Metallfaserklammer der hohe bis höchste Festigkeitsbereich angezeigt.

Als Ausgangsmaterial für die Herstellung der Metallfaser kommen grundsätzlich alle geeigneten Ausgangsformen in Betracht. Es kann hierfür auch üblicher Stahldraht zum Einsatz kommen. Vorteilhaft im Hinblick auf ein einfaches und kostengünstiges Herstellungsverfahren ist jedoch, dass die Metallfaser aus Bandmaterial durch einen Kerbwalzprozess mit bedarfsweise anschließendem Walkprozess vor dem Trennprozeß gefertigt ist. Soweit Stahlfasern für den Einsatz im Beton aus Bandmaterial durch einen Kerbwalzprozess hergestellt werden, wird das so gebildete Stahlfaseradernband anschließend getrennt. Die Verankerungen werden durch V-förmige Unterbrüche der Kerbnasen der Kerbwalze erzeugt. Die Gestaltung der keilförmigen Verankerungen erfolgt zu einem durch die V-Winkel der Unterbrüche und durch die gewählte Tiefe dieser V-förmigen Unterbrüche bezogen auf die Kerbtiefe. Der V-Winkel ergibt am Produkt den Ankerkeilwinkel. Mit der Kerbtiefe und der Tiefe der V-förmigen Unterbrüche wird die Größe der Verankerung gestaltet. Wenn zum Beispiel der V-förmige Unterbruch tiefer ausgeführt wird als die geplante Kerbtiefe, dann wird der Scheitel des Ankerkopfes breiter. Die V-förmigen Unterbrüche werden in der Regel parallel zur Walzwerkzeugachse im gewünschten Abstand der Verankerungen in das Walzwerkzeug eingeschliffen. Wenn es als nützlich betrachtet wird, können die V-förmigen Unterbrüche auch spiralförmig eingeschliffen werden. Die Trennung der Stahlfaseradernbänder zu Stahlfaseradern kann durch einen Schervorgang, der dem jeweiligen Kerbgrund folgt, ausgeführt werden, wobei durch einen herkömmlichen Schervorgang die Verankerungen relativ stark deformiert werden. Deshalb ist es empfehlenswert, den Trennprozess durch einen Walkprozess, mit Anritzen der Verankerungsköpfe in Flucht der einzelnen Kerbgründe, vorzubereiten. Die Stahlfaserandern sind dann auf die gewünschte Stahlfaserlänge abzulängen. Bei der Stahlfaserklammer mit Verankerung sollte das Verfahren nach der DE 10 2008 034 250 zur Anwendung kommen.

Üblicherweise werden die Verankerungsköpfe an allen vier Kantflächen und - bezogen auf die Längsrichtung der Faser - in jeweils gleicher Höhe angeordnet sein. Ebenso besteht jedoch auch die Möglichkeit, die Verankerungsköpfe in untereinander wechselnden Abständen oder auch nur paarweise an den Kantflächen der Bandober- und -unterseite auszubilden.

Letzteres empfiehlt sich insbesondere dann, wenn die Metallfaser zu einer Klammer ausgestaltet ist, wobei dann die Verankerungsköpfe nur an den beiden an eine Faseraußenfläche anschließenden Kantflächen ausgebildet sind, wobei die Enden dann so zur Klammer abgewinkelt sind, dass die Verankerungsköpfe sich innenseitig der Klammer gegenüber stehen.

Im Folgenden wird die Erfindung an einem in der Zeichnung dargestellten Ausführungsbeispiel einer Stahlfaser für Beton näher erläutert; es zeigen:
- Fig. 1: eine ausschnittsweise Darstellung einer Metallfaser nach der Erfindung in Seitenansicht,
- Fig. 2: den Gegenstand nach Fig. 1 in Draufsicht,
- Fig. 3: einen Schnitt durch den Gegenstand nach Fig. 1 längs der Linie C-C,
- Fig. 4: einen Schnitt durch den Gegenstand nach Fig. 1 längs der Linie D-D,
- Fig. 5: einen Schnitt durch den Gegenstand nach Fig. 1 längs der Linie B-B,
- Fig. 6: eine perspektivische Darstellung der Metallfaser.

Die in der Zeichnung dargestellte Stahlfaser ist vorgesehen für den Einsatz in Beton und dient zur Verbesserung der Leistungsfähigkeit des Betons bezüglich Zug-, Druck- und Stoßbelastung. Dabei sollen die Stahlfasern bei einer Rißbildung im Beton nach Möglichkeit ein Weiterlaufen des Risses unterbinden. Die in der Zeichnung nicht näher dargestellte, U-förmig gebogene Metallfaserklammer wird z.B. als vielfältiges Verbindungselement bei relativ weichem und elastischem Material, wie z.B. Holz in allen Varianten und Kunststoff, häufig im Baugewerbe und in der Möbelindustrie eingesetzt.

Im Einzelnen weist die Metallfaser, die hier im Ausführungsbeispiel mit dem oben erwähnten Kerbwalz-Verfahren hergestellt ist, im Wesentlichen rechtwinklig zueinander ausgerichtete Faseraußenflächen 1 auf, wobei die von den Faseraußenflächen gebildeten, in Faserlängsrichtung verlaufenden Faserkanten 2 in der Art einer Fase als schräg zu den Faseraußenflächen 1 ausgerichtete Kantflächen 4 ausgebildet sind. Diese Kantflächen 4 weisen Vorsprünge auf, die Verankerungsköpfe 3 gegenüber den zu stabilisierenden bzw. befestigenden Materialien bilden.

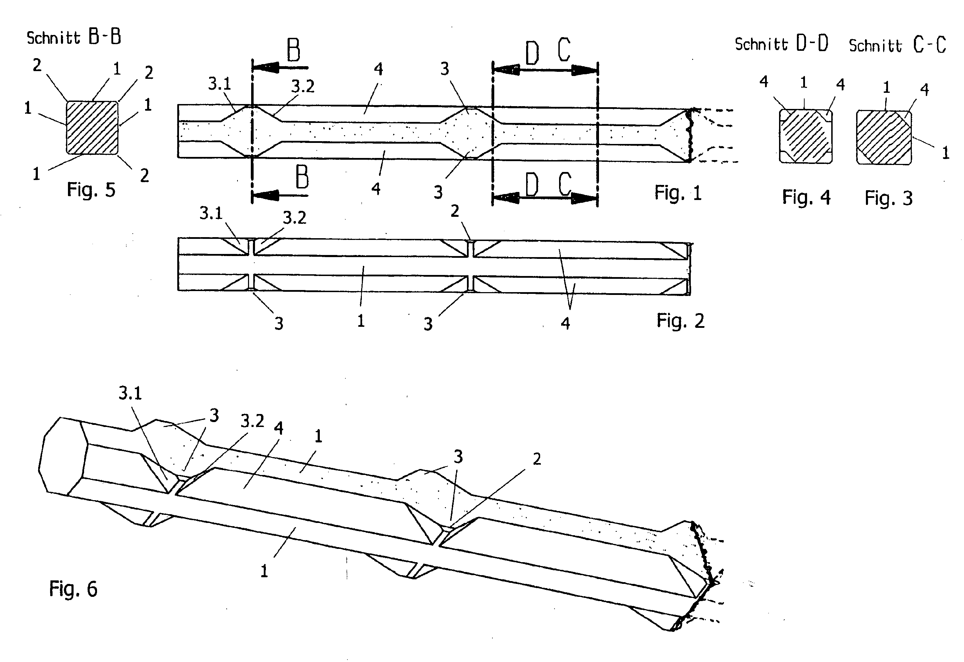

Wie sich auch aus der Zeichnung ergibt, bilden die Verankerungsköpfe 3 im Bereich der Kantflächen 4 den Querschnitt der Faser vergrößernde Ankerkeilflächen 3.1,3.2, wobei der Querschnitt der Faser im Scheitelbereich der Verankerungsköpfe 3 im wesentlichen rechteckige Gestalt aufweist, wie sich der Fig. 5 entnehmen lässt. Der Scheitelbereich des Verankerungskopfes 3 muß nicht linienförmig sein, sondern kann durchaus eine Breite von beispielsweise 0,03 mm aufweisen. Dies wird erreicht, indem beispielsweise beim Kerbvorgang der V-förmige Unterbruch der Kerbnasen etwas tiefer als die Kerbtiefe eingearbeitet wird. Die Querschnittsdifferenz zwischen dem mehr oder weniger achteckigen Faserquerschnitt und dem Querschnitt im Bereich des Verankerungkopfes 3 liegt je nach Kerbtiefe in etwa bei 25 % und ist als Formschluß wesentlich für eine wirksame Verankerung bei Zugbelastung. Die Querschnittsdifferenz zwischen dem Faserquerschnitt und dem Querschnitt am Verankerungskopf 3 wird durch den Kerbwinkel, der praktischerweise bei 90° liegt und die relative Kerbtiefe eingestellt. Wird zum Beispiel so tief gekerbt, dass sich die gegenüberliegenden Kerbspitzen fast berühren, dann wird der Faserquerschnitt nahezu viereckig bzw. rechteckig und die Querschnittsdifferenz wird dabei größer (bis gegen 50 %). Hierbei treten dann auch im Bereich zwischen den Kerbspitzen irgendwann Schiebungsbrüche auf, die auf eine Erschöpfung des Werkstoffes hinweisen und daher nicht unbedingt erwünscht sind.

Die Ankerkeilflächen 3.1,3.2 können unter einem Winkel von 10° bis 60° gegenüber der Längsrichtung der Faser ausgerichtet sein, wobei in der Praxis eher ein geringeres Intervall etwa im Bereich von 15° bis 30° zur Anwendung kommen wird, wie dies auch in der Zeichnung in Fig. 1 dargestellt ist.

Wie dort weiter zu sehen ist, sind bei Metallfasern für den Einsatz im Beton die acht Ankerkeilflächen eines Verankerungskopfes jeweils achssymmetrisch und symmetrisch zum Scheitel des Verankerungskopfes zueinander, also unter gleichem Winkel, angeordnet. Will man jedoch - etwa bei einer Klammer - die Auszugskräfte erhöhen, ohne das Eintreiben der Klammer in das zu befestigende Material in gleichem Ausmaß zu erhöhen, so können die Ankerkeilflächen 3.1,3.2 eines Verankerungskopfes 3 auch unsymmetrisch zum Scheitel des Verankerungskopfes 3, also unter ungleichen Winkeln angeordnet sein, wobei dann z.B. vorteilhafterweise die Ankerkeilflächen 3.1 unter kleineren Winkel zu dem ihr näher gelegenen Ende der Metallfaser weisen.

Die Kantflächen 4 grenzen, wie insbesondere aus Fig. 3 zu ersehen, unter einem Winkel von 45° an die Faseraußenfläche 1 an; grundsätzlich ist es im Rahmen der Erfindung jedoch auch möglich, diese Kantflächen 4 unter einem Winkel von 30° bis 60° an die Faseraußenflächen 1 angrenzen zu lassen, wobei die Kantflächenbreite abhängig ist von der Kerbtiefe.

Die Breite der Faseraußenflächen 1 im Bereich zwischen den Verankerungsköpfen 3 wird grundsätzlich von den Materialeigenschaften der Metallfaser sowie dem Herstellungsverfahren beeinflußt, also z.B. bei bandförmigem Ausgangsmaterial von der Banddicke, der Werkzeugauslegung und der Kerbtiefe und kann etwa 33% der Dicke bzw. der Breite der Faser betragen. Im Bereich zwischen den Verankerungen wird bei der Stahlfaser für Beton ein etwa achteckiger und bei der Metallfaserklammer meist ein eher rechteckiger Querschnitt angestrebt.

Die herkömmliche Drahtstahlfaser besserer Qualität wird aus relativ hochverfestigten unlegierten Stählen angefertigt. Für eine Stahlfaser für Beton, für die bandförmiges Vormaterial zum Einsatz kommt, kann je nach Verwendungszweck weiches bis hartes Vormaterial aus Stahl verschiedener Qualitäten eingesetzt werden, um selbige mit einem Kerbwalzprozess mit bedarfsweise anschließendem Walkprozess, sowie Trenn- und Ablängprozess herzustellen. Für die Metallfaserklammer wird in der Regel hochfestes Vormaterial gewünscht. Dies kann hochfester Edelstahl oder auch hochfester unlegierter oder legierter Stahl sein. Im Prinzip können alle Werkstoffe zum Einsatz kommen, wenn sie die passenden Eigenschaften haben.

In dem dargestellten Ausführungsbeispiel sind die Verankerungsköpfe 3 an allen vier Kantflächen 4 ausgebildet; für besondere Anwendungsfälle ist es jedoch ebenso denkbar, nur einzelne der Kantflächen 4 mit Verankerungsköpfen 3 zu versehen. Dies bietet sich beispielsweise an bei einer Ausgestaltung als Klammer, wo die Verankerungsköpfe 3 nur an den beiden an eine Faseraußenfläche anschließenden Kantflächen 4 ausgebildet sind, wobei die Enden dann so zur Klammer abgewinkelt sind, das die Verankerungsköpfe 3 sich nur innenseitig der Klammer gegenüberstehen. Damit weist die Klammer an ihrer U-profilförmigen Außenfläche keine störenden und gegebenenfalls eine Verletzungsgefahr darstellenden Vorsprünge auf.

## Patentansprüche

1. Metallfaser mit im wesentlichen rechtwinklig zueinander ausgerichteten Faseraußenoberflächen (1), auch mit abgewinkelten Enden in Form einer Klammer, zur Stabilisierung, Verfestigung oder Befestigung von Materialien wie Beton, Holz und dergleichen, **dadurch gekennzeichnet, daß** die von den Faseraußenflächen (1) der Metallfaser gebildeten, in Faserlängsrichtung verlaufenden Faserkanten (2) in der Art einer Fase als schräg zu den Faseraußenflächen (1) ausgerichtete Kantflächen (4) ausgebildet sind, und daß diese Kantflächen (4) Vorsprünge aufweisen, die Verankerungsköpfe (3) gegenüber den zu stabilisierenden, verfestigenden bzw. befestigenden Materialien bilden.

2. Metallfaser nach Anspruch 1, **dadurch gekennzeichnet, daß** die Verankerungsköpfe (3) im Bereich der Kantflächen (4) den Querschnitt der Faser vergrößernde Ankerkeilflächen (3.1,3.2) bilden, wobei der Querschnitt der Faser im Scheitelbereich der Verankerungsköpfe (3) im wesentlichen rechteckige Gestalt aufweist.

3. Metallfaser nach Anspruch 2, **dadurch gekennzeichnet, daß** die Ankerkeilflächen (3.1,3.2) unter einem Winkel von 10° bis 60° gegenüber der Längsrichtung der Faser ausgerichtet sind.

4. Metallfaser nach Anspruch 2, **dadurch gekennzeichnet, daß** die Ankerkeilflächen (3.1,3.2) unter einem Winkel von 15° bis 30° gegenüber der Längsrichtung der Faser ausgerichtet sind.

5. Metallfaser nach einem der Ansprüche 1 bis 4, **dadurch gekennzeichnet, daß** die Ankerkeilflächen (3.1,3.2) eines Verankerungskopfes (3) achssymmetrisch und bezogen auf den Scheitel des Verankerungskopfes (3) symmetrisch, also unter gleichem Winkel angeordnet sind.

6. Metallfaser nach einem der Ansprüche 1 bis 4, **dadurch gekennzeichnet, daß** die Ankerkeilflächen (3.1,3.2) eines Verankerungskopfes (3) unsymmetrisch, also unter ungleichen Winkeln angeordnet sind, wobei vorteilhafterweise die Ankerkeilfläche (3.1) mit dem kleinerem Winkel zu dem ihr näher gelegenen Ende der Metallfaser weist.

7. Metallfaser nach einem der Ansprüche 1 bis 6, **dadurch gekennzeichnet, daß** die Kantflächen (4) unter einem Winkel von 30° bis 60° an die Faseraußenfläche (1) angrenzen.

8. Metallfaser nach einem der Ansprüche 1 bis 6, **dadurch gekennzeichnet, daß** die Kantflächen (4) unter einem Winkel von 45° an die Faseraußenfläche angrenzen.

9. Metallfaser nach einem der Ansprüche 1 bis 8, **dadurch gekennzeichnet, daß** die Breite der Faseraußenfläche (1) im Bereich zwischen den Verankerungsköpfen (3) etwa 33% der Dicke bzw. der Breite der Faser beträgt.

10. Metallfaser nach einem der Ansprüche 1 bis 9, **dadurch gekennzeichnet, daß** sie je nach Einsatzzweck aus weichem bis hochfestem Vormaterial gefertigt ist.

11. Metallfaser nach einem der Ansprüche 1 bis 10, **dadurch gekennzeichnet, daß** sie aus Bandmaterial durch einen Kerbwalzprozess und Trennprozeß mit letzterem bedarfsweise vorgeschaltetem Walkprozess gefertigt ist.

12. Metallfaser nach einem der Ansprüche 1 bis 11, **dadurch gekennzeichnet, daß** die Verankerungsköpfe (3) nur paarweise an nicht allen Kantflächen (4) ausgebildet sind.

13. Metallfaser nach einem der Ansprüche 1 bis 11, **dadurch gekennzeichnet, daß** bei einer Ausgestaltung als Klammer die Verankerungsköpfe (3) nur an den beiden an eine Faseraußenfläche (1) anschließenden Kantflächen (4) ausgebildet sind, wobei die Enden so zur Klammer abgewinkelt sind, daß die Verankerungsköpfe (3) sich innenseitig der Klammer gegenüberstehen.

## Claims

1. A metal fiber having outer faces oriented substantially at right angles to one another, and also having bent ends in the shape of a fastener, for stabilizing, strengthening, or fastening materials such as concrete, wood, and the like, **characterized in that** corners (2) formed by the outer faces (1) of the metal fiber and extending longitudinally of the fiber are chamfered to form edge faces (4) oriented at an angle to the outer faces (1), and **in that** these edge faces (4) have projections that form anchor heads (3) for the materials to be stabilized, strengthened, or fastened.

2. The metal fiber in accordance with claim 1,
**characterized in that** the anchor heads (3) form beveled anchor faces (3.1, 3.2) that enlarge the cross-section of the fiber in the area of the edge faces (4), the cross-section of the fiber having a substantially square shape in the centers of the anchor heads (3).

3. The metal fiber in accordance with claim 2,
**characterized in that** the beveled anchor faces (3.1, 3.2) are oriented at an angle of 10° to 60° relative to the longitudinal axis of the fiber.

4. The metal fiber in accordance with claim 2,
**characterized in that** the beveled anchor faces (3.1, 3.2) are oriented at an angle of 15° to 30° to the longitudinal axis of the fiber.

5. The metal fiber in accordance with any of claims 1 through 4, **characterized in that** the beveled anchor faces (3.1, 3.2) of an anchor head (3) are arranged axially symmetrical and, relative to the center of the anchor head (3), symmetrical, that is, at the same angle.

6. The metal fiber in accordance with any of claims 1 through 4, **characterized in that** the beveled anchor faces (3.1, 3.2) of an anchor head (3) are arranged asymmetrical, that is, at unequal angles, the beveled anchor face (3.1) closer to the end of the metal fiber advantageously having a smaller angle.

7. The metal fiber in accordance with any of claims 1 through 6, **characterized in that** the edge faces (4) meet the outer face (1) at an angle of 30° to 60°.

8. The metal fiber in accordance with any of claims 1 through 6, **characterized in that** the edge faces (4) meet the outer face at an angle of 45°.

9. The metal fiber in accordance with any of claims 1 through 8, **characterized in that** the width of the outer face (1) in the area between the anchor heads (3) is about 33% of the thickness or width of the fiber.

10. The metal fiber in accordance with any of claims 1 through 9, **characterized in that** it is produced from soft to high-strength starting material, depending on the intended use.

11. The metal fiber in accordance with any of claims 1 through 10, **characterized in that** it is produced from strip material using a notching roll process and separating process, where necessary with a flexing process preceding the separating process.

12. The metal fiber in accordance with any of claims 1 through 11, **characterized in that** the anchor heads (3) are provided only in pairs on not all of the edge faces (4).

13. The metal fiber in accordance with any of claims 1 through 11, **characterized in that** in one embodiment as a fastener the anchor heads (3) are provided only on the two edge faces (4) meeting the outer face (1), the ends being angled relative to the fastener such that the anchor heads (3) oppose one another on the inside of the fastener.

## Revendications

1. Armature métallique avec des surfaces extérieures d'armature (1) orientées essentiellement à angle droit l'une par rapport à l'autre, aussi avec des extrémités coudées en forme d'agrafe, pour la stabilisation, la consolidation ou la fixation de matériaux comme le béton, le bois et analogues, **caractérisée en ce que** les arêtes d'armature (2) formées par les faces extérieures d'armature (1) de l'armature métallique et s'étendant en direction longitudinale de l'armature sont réalisées à la manière d'un chanfrein comme des faces d'arête (4) orientées en oblique par rapport aux faces extérieures d'armature (1), et **en ce que** ces faces d'arête (4) présentent des saillies, qui forment des têtes d'ancrage (3) par rapport aux matériaux à stabiliser, à consolider ou à fixer.

2. Armature métallique selon la revendication 1, **caractérisée en ce que** les têtes d'ancrage (3) forment des faces de coins d'ancrage (3.1, 3.2) agrandissant la section transversale de l'armature dans la région des faces d'arête (4), dans laquelle la section transversale de l'armature présente, dans la région du sommet des têtes d'ancrage (3), une configuration essentiellement rectangulaire.

3. Armature métallique selon la revendication 2, **caractérisée en ce que** les faces de coins d'ancrage (3.1, 3.2) sont orientées sous un angle de 10° à 60° par rapport à la direction longitudinale de l'armature.

4. Armature métallique selon la revendication 2, **caractérisée en ce que** les faces de coins d'ancrage (3.1, 3.2) sont orientées sous un angle de 15° à 30° par rapport à la direction longitudinale de l'armature.

5. Armature métallique selon l'une quelconque des revendications 1 à 4, **caractérisée en ce que** les faces de coins d'ancrage (3.1, 3.2) d'une tête d'ancrage (3) sont axisymétriques et sont disposées de façon symétrique, c'est-à-dire sous le même angle, par rapport au sommet de la tête d'ancrage (3).

6. Armature métallique selon l'une quelconque des revendications 1 à 4, **caractérisée en ce que** les faces de coins d'ancrage (3.1, 3.2) d'une tête d'ancrage (3) sont disposées de façon asymétrique, c'est-à-dire sous des angles inégaux, dans laquelle la face de coin d'ancrage (3.1) avec le plus petit angle est avantageusement dirigée vers l'extrémité de l'armature située plus près d'elle.

7. Armature métallique selon l'une quelconque des revendications 1 à 6, **caractérisée en ce que** les faces d'arête (4) sont adjacentes à la face extérieure d'armature (1) sous un angle de 30° à 60°.

8. Armature métallique selon l'une quelconque des revendications 1 à 6, **caractérisée en ce que** les faces d'arête (4) sont adjacentes à la face extérieure d'armature sous un angle de 45°.

9. Armature métallique selon l'une quelconque des revendications 1 à 8, **caractérisée en ce que** la largeur de la face extérieure d'armature (1) dans la région située entre les têtes d'ancrage (3) vaut environ 33 % de l'épaisseur ou de la largeur de l'armature.

10. Armature métallique selon l'une quelconque des revendications 1 à 9, **caractérisée en ce qu'**elle est fabriquée en un matériau primaire de doux à hautement résistant selon l'utilisation envisagée.

11. Armature métallique selon l'une quelconque des revendications 1 à 10, **caractérisée en ce qu'**elle est fabriquée à partir d'un matériau en bande par un procédé de laminage d'entailles et un procédé de séparation avec, si nécessaire, un procédé de flexion alternée précédant ce dernier.

12. Armature métallique selon l'une quelconque des revendications 1 à 11, **caractérisée en ce que** les têtes d'ancrage (3) ne sont formées que par paires mais pas sur toutes les faces d'arête (4).

13. Armature métallique selon l'une quelconque des revendications 1 à 11, **caractérisée en ce que**, avec une configuration en forme d'agrafe, les têtes d'ancrage (3) ne sont formées que sur les deux faces d'arête (4) se raccordant à une face extérieure d'armature (1), dans laquelle les extrémités sont coudées en forme d'agrafe de telle manière que les têtes d'ancrage (3) soient l'une en face de l'autre du côté intérieur de l'agrafe.
